## Europäisches Patentamt

## European Patent Office

## Office européen des brevets

(11) Numéro de publication: **0 027 292**
**B1**

(12) **FASCICULE DE BREVET EUROPEEN**

(45) Date de publication du fascicule du brevet:
**01.02.84**

(21) Numéro de dépôt: **80200950.6**

(22) Date de dépôt: **09.10.80**

(51) Int. Cl.³: **C 09 K 3/18**

(54) Procédé pour empêcher la formation de verglas sur les routes et composition de fixation pour la mise en oeuvre de ce procédé.

(30) Priorité: **11.10.79 FR 7925299**

(43) Date de publication de la demande:
**22.04.81 Bulletin 81/16**

(45) Mention de la délivrance du brevet:
**01.02.84 Bulletin 84/5**

(84) Etats contractants désignés:
**FR NL**

(56) Documents cités:
**US - A - 3 310 494**
**US - A - 4 012 355**

(73) Titulaire: **Dubois, Robert, Chemin de Culturaz 46, CH-1095 Lutry/VD (CH)**
(84) Etats contractants désignés: **FR**

(73) Titulaire: **SELFIXAT S.A., 10, rue Bellot, CH-1206 Genève (CH)**
(84) Etats contractants désignés: **NL**

(72) Inventeur: **Dubois, Robert, Chemin de Culturaz 46, CH-1095 Lutry (CH)**
Inventeur: **Dubois, Pierre-Yves, Chemin de Culturaz 46, CH-1095 Lutry (CH)**

(74) Mandataire: **Hranitzky, Wilhelm Max, c/o WILLIAM BLANC & CIE Conseils en Propriété Industrielle SA 5, Place du Molard, CH-1204 Genève (CH)**

Procédé pour empêcher la formation de verglas sur les routes et composition de fixation
pour la mise en oeuvre de ce procédé

La présente invention concerne un procédé pour empêcher la formation de verglas sur les routes et favoriser la fonte de la neige. L'invention concerne également une composition de fixation pour la mise en oeuvre de ce procédé.

On connaît différents types de procédés pour empêcher la formation de verglas sur les routes. Les plus anciens de ces procédés consistent à effectuer un salage des routes avec des produits abaissant le point de congélation de l'eau, à savoir des sels tels que le chlorure de sodium, le chlorure de calcium, le chlorure de magnésium ou encore l'éthylène glycol.

Le salage le plus courant est effectué avec du chlorure de sodium. Un tel salage n'est efficace que pendant une durée très limitée. En effet, si le salage est effectué à sec sur chaussée sèche, rapidement le trafic évacue une grande partie du sel. Si la chaussée est humide, le sel a tendance à coller à la route et le trafic n'a que peu d'influence sur l'élimination du sel; c'est la raison pour laquelle on a parfois recours à un salage par une saumure ou un sel humidifié. Mais, un autre phénomène peut intervenir pour éliminer complètement le sel, c'est la pluie; le présalage devient absolument inefficace, car l'eau de pluie dissout rapidement le sel qui s'écoule ainsi en dehors de la chaussée. Les accidents dus au verglas sur routes salées sont le résultat de l'apparition de 'un ou l'autre de ces deux phénomènes. En outre, le nombre d'interventions par hiver devient très important, car il faut sans cesse renouveler le salage. Les dégâts causés à l'environnement, l'augmentation, parfois importante de la salinité des lacs et rivières, voire également des nappes phréatiques, sont le résultat des salages intensifs tels qu'ils sont pratiqués de nos jours pour lutter contre la formation de verglas.

On a également proposé d'incorporer des sels à l'intérieur du revêtement routier. Toutefois, ce type de procédé est d'un prix de revient élevé.

La présente invention a pour but, en remédiant aux inconvénients mentionnés ci-dessus, de fournir un procédé pour empêcher la formation de verglas sur les routes qui soit efficace pendant une longue durée et d'un coût global moins élevé que les systèmes classiques et ménageant l'environnement par la très faible quantité de sel répandu, diminuant ainsi les risques de corrosion.

La présente invention vise à fixer un sel classiquement utilisé pour empêcher la formation de verglas sur les revêtements routiers.

A cet effet, la présente invention a pour objet un procédé caractérisé en ce que l'on fixe sur un revêtement routier un sel abaissant le point de congélation de l'eau à l'aide d'une composition aqueuse de fixation qui comprend un mélange d'un agent d'adhésivité constitué par une dispersion aqueuse d'un polymère ou copolymère filmogène et d'un agent hydrophobe hydrosoluble devenant à l'air insoluble dans l'eau, la proportion pondérale d'agent hydrophobe par rapport à l'extrait sec de l'agent d'adhésivitée étant de 5 à 25%, cette composition de fixation étant utilisée en une proportion telle que l'ensemble de l'agent d'adhésivité et de l'agent hydrophobe représente en poids à sec de 10 à 120% du poids du sel. De préférence, la proportion pondérale d'agent hydrophobe par rapport à l'extrait sec de l'agent d'adhésivité est de 10 à 15%. Egalement de préférence, la composition de fixation est utilisée en une proportion telle que l'ensemble de l'agent d'adhésivité et de l'agent hydrophobe représente en poids à sec de 25 à 60% du poids du sel.

La composition aqueuse de fication peut comprendre, en outre, un agent anti-mousse à raison de 10 à 20 20 000 ppm en poids à sec.

Selon un premier mode de mise en oeuvre du procédé selon l'invention, on applique sur le revêtement routier une seule couche d'une composition aqueuse comprenant un mélange de sel et de la composition de fixation. Cette composition pénètre profondément dans les pores et anfractuosités du revêtement routier. On laisse l'eau s'évaporer. Après évaporation de l'eau, on obtient des cristaux de sel qui sont enrobés par une pellicule pratiquement imperméable à l'eau ruisselante, mais perméable à la vapeur d'eau. Les cristaux de sel sont en outre solidement fixés à la surface du revêtement routier.

Les cristaux de sel résistent ainsi à la fois au délavage par la pluie et au trafic routier. En raison de la perméabilité de la pellicule d'enrobage à la vapeur d'eau, ils restent néanmoins efficaces pour lutter contre la formation du verglas.

Selon un mode préféré de mise en oeuvre, on effectue l'application de la composition en plusieurs couches, la proportion globale de l'ensemble de l'agent d'adhésivité et de l'agent hydrophobe restant dans les limites précédemment indiqueées de 10 à 120% du poids du sel, pour les différentes couches considérées ensemble, mais cette proportion de la composition de fixation par rapport au poids du sel variant dans le larges limites pour chaque couche individuelle.

Ainsi, dans le cas d'un dépôt en trois couches, on effectue l'application suivante: une première couche d'une composition riche en composition de fixation et pauvre en sel; une seconde couche d'une composition riche en sel et pauvre en composition de fixation; et une troisième couche d'une composition riche en composition de fixation et pauvre en sel, en laissant l'eau s'évaporer entre chaque application.

Par composition riche en composition de fixation et pauvre en sel, on désigne une composition qui contient de 0,5 à 500 parties d'extraits sec, en poids, de composition de fixation pour une partie en poids de sel et par composition riche en sel et pauvre en composition de fixation, on désigne une composition qui contient de 0,5 à 50 parties d'extrait sec en poids de composition de fixation pour 100 parties en poids de sel, ces parties étant exprimées en poids à sec.

Le sel utilisé est avantageusement du chlorure de sodium, à la fois pour des questions de prix et d'efficacité. D'autres sels peuvent cependant être utilisés et, notamment, des chlorures tels que le chlorure de magnésium, ou encore des nitrates.

Le chlorure de sodium est appliqué avantageusement à raison de 10 à 100 g/m2 de revêtement routier. Il est généralement utilisé, de manière classique, sous forme d'une solution aqueuse saturée.

L'agent d'adhésivité est constitué par une dispersion aqueuse d'un polymère ou copolymère filmogène. Pratiquement, toute dispersion d'un polymère ou copolymère filmogène convient, notamment ceux obtenus par polymérisation ou copolymérisation de monomères ayant une ou plusieurs liaisons éthyléniques.

Cet agent est avantageusement une dispersion aqueuse d'un copolymère styrène-butadiène contenant en poids de 30 à 80% de styrène. Comme autres exemples on peut citer des dispersions aqueuses de polymères ou copolymères vinyliques tels que des polymères ou copolymères d'acétate de vinyle ou de chlorure de vinyle.

L'agent anti-mousse est toute agent approprié compatible avec l'agent d'adhésivité et l'agent hydrophobe et notamment une huile de silicone telle que le produit commercialisé par la Société Rhône Poulenc sous la marque »Rhodorsil 416«.

L'agent hydrophobe hydrosoluble est notamment un siliconate, par exemple un alkyl siliconate de sodium, potassium ou calcium. Ce type de produit, qui est notamment un méthyl siloxane ayant un rapport $CH_3/Si$ de 0,5 à 1,8, est classiquement utilisé pour l'hydrofugation des bétons. Il se transforme sous l'action du gaz carbonique de l'air en une silicone insoluble dans l'eau et un carbonate métallique.

Pour augmenter le caractère hydrophobe de la pellicule obtenue, on peut ajouter à la composition de fixation un second agent hydrophobe choisi notamment parmi des mono ou des polyamines hydrosolubles, ou rendues hydrosolubles ou dispersibles, à longue chaîne (en $C_6$ à $C_{18}$), des N-alkyl ($C_8 - C_{22}$) polypropylène mono- ou diamines ou des monoalcools à longue chaîne (en $C_{16}$ à $C_{30}$), à raison de 0 à 5% de la composition de fixation en poids à sec.

Comme exemples d'amines hydrosolubles à longue chaîne, on peut citer les produits commercialisés sous les désignations Duomeen, qui sont des alkyl ($C_6 - C_{18}$) propylène-diamines et Armeen, qui sont des alkyl amines en $C_6 - C_{18}$.

La composition de fixation est préparée par mélange sous agitation de l'agent d'adhésivité et du (ou des) agent(s) hydrophobe(s) et éventuellement des autres ingrédients.

Le procédé selon la présente invention, et notamment la variante dans laquelle plusieurs couches sont déposées, comporte quatre avantages essentiels par rapport au procédé traditionnel:

1) les cristaux de sel sont collés à la chaussée lorsque toute l'eau de la composition (saumure comprise) s'est évaporée.

2) les cristaux de sel sont pratiquement complètement protégés contre le délavage provoqué par les eaux de ruissellement, étant donné que la membrane polymère les protégeant est imperméable à l'eau mais perméable à la vapeur d'eau, pour autant que le degré hygrométrique atteigne ou dépasse 75%.

3) la tension superficielle de la composition mise en oeuvre dans le procédé de la présente invention est fortement abaissée, ce qui permet une bonne pénétration de cette dernière jusque dans le fond des pores de la couche de roulement, créant ainsi une réserve de sel hors d'atteinte de l'eau de pluie.

En effet, des essais de laboratoire ont démontré que l'addition de la composition de fixation à une saumure de NaCl saturée fait passer la tension superficielle, qui est dans le cas de la saumure de NaCl saturée pure de 82 dynes/cm, à une valeur de 27 dynes/cm environ pour un mélange contenant une partie de la composition de fixation pour une proportion de 1,5 à 10 parties de saumure de NaCl saturée. Cette diminution remarquable de la tension superficielle pour une saumure additionnée de la composition de fixation permet une meilleure pénétration du produit dans les pores des enrobés bitumineux qui forment les couches de roulement des revêtements routiers.

4) le procédé de la présente invention dans sa variante multicouches permet de maîtriser parfaitement les dimensions des cristaux de sel lors de l'évaporation de l'eau de la composition grâce à la possibilité du réglage de la proportion de composition de fixation par rapport à la saumure, dans chacune des différentes couches déposées successivement. On peut obtenir des cristaux ayant des arêtes de 0,035 mm à 1 mm. Or, on a calculé qu'un gramme de sel formé à l'aide de cristaux dont les arêtes ont 0,035 mm représente approximativement 11 millions de cristaux, alors qu'un gramme de sel formé à l'aide de cristaux ayant des arêtes de 1 mm (c'est-à-dire la dimension moyenne des cristaux de recristallisation obtenus à partier d'une saumure conventionelle) représentait 500 cristaux.

Etant donné que l'efficacité du sel, dans la lutte contre le verglas, dépend essentiellement de la surface spécifique, donc de la dimension des cristaux, il apparaît que l'obtention de cristaux de plus faibles dimensions grâce au réglage du rapport composition de fixation/saumure dans les différentes couches déposées successivement, est un facteur améliorant considérablement l'efficacité de la composition selon la présente invention.

Les exemples suivants illustrent la présente invention.

### Exemple 1

On a préparé une composition de fixation en mélangeant sous agitation:

47,85 parties en poids d'une dispersion aqueuse d'un copolymère styrène butadiène (ayant un rapport pondéral styrène/butadiène de 60/40) à 50% d'extrait sec, (commercialisé sous la désignation Rhodopas SB 012 de la Société Rhône-Poulenc),
7,15 parties en poids d'une solution de méthyl siliconate de potassium à 45% en poids de matières actives (commercialisé sous la désignation Rhodorsil Siliconate 51 T par la Société Rhône-Poulenc),
100 ppm d'agent anti-mousse »Rhodorsil 416«.

A l'aide de cette composition, on a préparé une composition anti-verglas en mélangeant:

55 parties en poids de la composition de fixation précédente,
50 parties en poids de sel à dégeler (NaCl provenant de la Société des Salines Suisses Réunies),
138 parties d'eau,
soit, au total, 243 parties de composition,

On a effectué des essais avec cette composition sur des plaques d'enrobés bitumineux en appliquant la composition à raison de 50 g de NaCl par m2 par comparaison avec une saumure classique appliquée à raison de la même quantité de NaCl. Les essais ont été effectués après évaporation complète de l'eau.

Les plaques utilisées étaint des plaques de 50 × 18 × 5 cm constituées d'un enrobé classique de type AB 16 avec un bitume de pénétration 60/70.

### Test de résistance au délavage

On a immergé des plaques dans de l'eau déminéralisée (8 l) et on a mesuré la quantité de sel dissous dans l'eau par rapport à la quantité initiale.

| Temps | NaCl dissous % | |
| | Saumure classique | Composition selon l'invention |
| --- | --- | --- |
| ½ h | 100 % | 39 % |
| 2 h | — | 55 % |
| 17 h | — | 59 % |
| 24 h | — | 59 % |

Après immersion totale dans l'eau, il reste donc après 24 h sur un enrobé traité avec la composition de l'invention encore 41% de sel, soit environ 20 g de NaCl/m2.

Après 17 h d'immersion, on ne constate pratiquement plus de perte de NaCl.

### Test d'usure au simulateur de trafic

On a déterminé initialement le NaCl non protégé par la composition de fixation selon l'invention par un test de réaction avec AgNO$_3$. Même après humidification il n'y avait pas de réaction.

On a alors simulé une usure par roulement d'un pneu sur la plaque. Après 5000 passages, la réaction était positive, principalement au passage de la roue montrant ainsi qu'il restait encore du sel.

### Test de glissance à froid

On a refroidi à −30°C des plaques préalablement traitées par une saumure classique ou la composition selon l'invention. Puis, on a ajouté des quantités égales d'eau sur les plaques. De la glace s'est formée et on a laissée les plaques se réchauffer. A une température de −15°C, on a constaté que la glace se détache à la surface des plaques traitées par la composition selon l'invention, alors qu'elle adhère à la surface des plaques traitées par la saumure classique.

Dans ces même conditions, la glissance, telle que mesurée avec un appareil SRT, était moins défavorable avec la composition selon l'invention qu'avec la saumure classique.

Avec cette composition, on a, par ailleurs, effectué des essais sur route.

La composition a été appliquée à raison de 50 g de NaCl/m2. Au bout de huit mois, après une pluviosité de 350 mm d'eau au cours de 55 chutes de pluie, il subsistait encore assez de chlorure de sodium sur la route pour être efficace contre une formation de verglas.

### Exemple 2

On a préparé une composition de fixation en mélangeant sous agitation:

43,5 parties en poids de la dispersion utilisée à l'exemple 1,
6,5 parties en poids de la solution de méthyl siliconate de potassium utilisée à l'exemple 1,
100 ppm d'agent anti-mousse Rhodorsil 416.

A l'aide de cette composition, on a préparé une composition anti-verglas en mélangeant:

50 parties en poids de la composition de fixation précédente, 100 parties de NaCl,
306 parties d'eau.

On a effectué avec cette composition des essais comme à l'exemple 1 en appliquant la composition à raison de 100 g de NaCl/m2. On a obtenu des résultats analogues.

### Exemple 3

On a appliqué sur une route, par mètre carré, les trois compositions successives suivantes, en laissant l'eau s'évaporer entre chaque application;

#### Composition 1
#### (riche en composition de fixation)

contenant
- 38 g de la composition de fixation de l'exemple 1
- 5,74 g de NaCl

#### Composition 2
#### (riche en sel)

contenant
- 4 g de la composition de fixation de l'exemple 1
- 41,10 g de NaCl
- 134,06 g d'eau

#### Composition 3
#### (riche en composition de fixation)

contenant
- 8 g de la composition de fixation de l'exemple 1
- 3,16 g de NaCl
- 6,44 g d'eau

On a obtenu une excellente efficacité contre la formation de verglas et une excellente résistance à l'usure du chlorure de sodium ainsi enrobé.

### Exemple 4

On a préparé une composition comme à l'exemple 1, mais en ajoutant à la composition de fixation 2% de Duomeen T par rapport au poids de la composition de fixation.

On a obtenu une parfaite résistance dans le temps d'une plaque recouverte de la composition déposée par le procédé de l'invention à raison de 50 g de NaCl par m2 dans des essais de formation de verglas au laboratoire.

### Etude expérimentale de l'action de la composition de fixation

Afin de mettre en évidence les caractéristiques avantageuses du procédé de la présente invention, notamment dans sa variante à plusieurs couches, en ce qui concerne la limitation de la taille des cristaux de chlorure de sodium formés, on réalise les essais suivants.

### Essai 1

On dépose une couche d'un mélange d'une composition de fixation telle que définie à l'exemple 1 et de saumure saturée en une épaisser d'environ 60 microns sur une plaque de verre et on laisse sécher pendant 48 heures à 20°C. Soit S le nombre de parties en poids de saumure saturée ajoutées à 100 parties en poids de composition de fixation.

L'examen microscopique montre que le chlorure de sodium cristallise sous forme de cristaux cubiques avec une morphologie très variable en fonction de la proportion relative de fixation dans le mélange. Pour de faibles quantités de saumure ajoutées, soit S de 50 à 100, il y a germination de cristaux plats à partir d'un petit cristal central pour former des figures en forme de croix.

D'autre part, dans ce cas, les cristaux paraissent particulièrement bien recouverts par la pellicule d'enrobage polymère. Pour des proportions plus élevées de saumure (S = 250 à 500) le cristal central grossit. On note également, partant des angles de cristaux, la présence d'importantes arborescences de cristaux plats qui sillonnent l'espace entre les cristaux. Ce phénomène est maximum pour 500 parties de saumure; au-delà les arborescences deviennent peu importantes et disparaissent pour des quantités élevées de saumure (au-delà de S = 2500 environ).

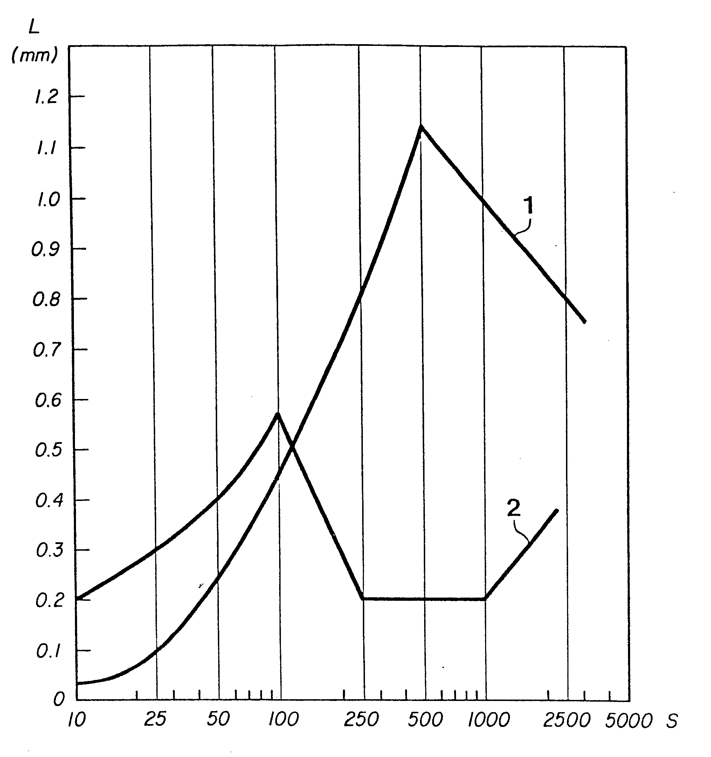

La figure unique du dessin annexé montre la courbe représentative (courve 1) des variations de la longueur moyenne L, en millimètres, de l'arête du cristal central en fonction de S.

### Essai 2

Sur une première déposée de la manière indiquée dans l'essai 1, avec une proportion relative de composition de fixation telle que S = 50, on dépose une deuxième couche d'épaisseur initiale identique.

On mesure la longueur moyenne L dans cette seconde couche pour différentes valeurs de S et l'on constate la dépendance illustrée par la courbe 2 de la figure.

Il apparaît que la deuxième couche présente des cristaux de chlorure de sodium dont la longueur moyenne L des arêtes est inférieure à 0,6 mm, c'est-à-dire nettement inférieure à celle des cristaux de recristallisation d'une saumure conventionelle sans composition de fixation, et qu'en particulier, par un choix judicieux de S, on peut obtenir des cristaux dont la taille est de l'ordre de 0,2 mm.

Il est à noter que la teneur en eau de la composition de fixation n'est pas déterminante puisque l'eau ne constitue qu'un véhicule qui s'évapore après application sur le revêtement routier. Toutefois, dans le cas où l'on applique sur le revêtement routier une composition aqueuse comprenant un mélange de sel et de la composition de fixation, on utilise avantageusement une quantité d'eau suffisante pour dissoudre la totalité du sel et de préférence juste suffisante pour dissoudre la totalité du sel.

**Revendications**

1. Procédé pour empêcher la formation de verglas sur les routes, caractérisé en ce que l'on fixe sur un revêtement routier un sel abaissant le point de congélation de l'eau à l'aide d'une composition aqueuse de fixation qui comprend un mélange d'un agent d'adhésivité constitué par une dispersion aqueuse d'un polymère ou copolymère filmogène et d'un agent hydrophobe hydrosoluble devenant à l'air insoluble dans l'eau, la proportion pondérale d'agent hydrophobe par rapport à l'extrait sec de l'agent d'adhésivité étant de 5 à 25%, cette composition de fixation étant utilisée en une proportion telle que l'ensemble de l'agent d'adhésivité et de l'agent hydrophobe représente en poids à sec de 10 à 120% du poids du sel.

2. Procédé selon la revendication 1, caractérisé en ce que la composition de fixation représente de 25 à 60% en poids à sec du poids du sel.

3. Procédé selon la revendication 1 ou la revendication 2, caractérisé en ce que le sel est du chlorure de sodium, appliqué, à raison de 10 à 100 g/m2 de revêtement routier.

4. Procédé selon l'une quelconque des revendications précédentes, caractérisé en ce que l'on applique sur le revêtement routier au moins une couche d'une composition aqueuse comprenant un mélange de sel et de la composition de fixation.

5. Procédé selon la revendication 4, caractérisé en ce que l'on applique sur le revêtement routier une couche d'une composition riche en composition de fixation et pauvre en sel, on laisse l'eau s'évaporer, on applique ensuite une couche d'une composition riche en sel et pauvre en composition de fixation, on laisse l'eau s'évaporer et on applique enfin une couche d'une composition riche en composition de fixation et pauvre en sel.

6. Composition de fixation pour la mise en oeuvre du procédé selon l'une des revendications précédentes, caractérisée en ce qu'elle comprend un mélange d'un agent d'adhésivité constitué par une dispersion aqueuse d'un polymère ou copolymère filmogène et d'un agent hydrophobe hydrosoluble devenant à l'air insoluble dans l'eau, la proportion pondérale d'agent hydrophobe par rapport à l'extrait sec de l'agent d'adhésivité étant de 5 à 25%.

7. Composition selon la revendication 6, caractérisée en ce qu'elle comprend un agent anti-mousse à raison de 10 à 20 000 ppm en poids à sec.

8. Composition selon la revendication 6 ou la revendication 7, caractérisée en ce que l'agent d'adhésivité est une dispersion aqueuse d'un copolymère styrène-butadiène contenant en poids de 30 à 80% de styrène.

9. Composition selon l'une des revendications 6 à 8, caractérisée en ce que l'agent hydrophobe est un siliconate.

10. Composition selon la revendication 9, caractérisée en ce que le siliconate est un méthyl siliconate de potassium.

11. Composition selon l'une quelconque des revendications 6 à 10, caractérisée en ce que la proportion pondérale d'agent hydrophobe par rapport à l'extrait sec de l'agent d'adhésivité est de 10 à 15%.

12. Composition selon l'une quelconque des revendications 6 à 11, caractérisée en ce qu'elle comprend un second agent hydrophobe.

13. Composition selon la revendication 12, caractérisée en ce que le second agent hydrophobe est choisi parmi les mono- ou polyamines hydrosolubles, ou rendues hydrosolubles ou dispersibles, à longue chaîne (en $C_6$ à $C_{18}$), les N-alkyl ($C_8 - C_{22}$) polypropylène mono- ou diamines ou les monoalcools à longue chaîne (en $C_{16}$ à $C_{30}$).

14. Composition selon la revendication 12 ou la revendication 13, caractérisée en ce que le second agent hydrophobe représente de 0 à 5% en poids sec de la composition de fixation.

15. Procédé selon l'une des revendications 1 à 5, caractérisé en ce que l'on utilise la composition selon l'une des revendications 6 à 14.

**Patentansprüche**

1. Verfahren zur Verhinderung der Glatteisbildung auf Straßen, dadurch gekennzeichnet, daß man auf dem Straßenbelag ein Salz, durch das der Gefrierpunkt des Wassers herabgesetzt wird, mit Hilfe einer wäßrigen Zusammensetzung befestigt, die ein Gemisch aus einem Klebstoff, der aus einer wäßrigen Dispersion eines filmbildenden Polymeren oder Copolymeren besteht, sowie ein hydrophobes wasserlösliches Mittel, das an der Luft wasserunlöslich wird, umfaßt, wobei der Gewichtsanteil des hydrophoben Mittels, bezogen auf die Trockensubstanz des Klebstoffs, 5 bis 25% beträgt, und wobei die Befestigungszusammensetzung in einem solchen Verhältnis verwendet wird, daß der Klebstoff und das hydrophobe Mittel zusammen im trockenen Zustand 10 bis 120 Gew.-% des Salzes ausmachen.

2. Verfahren nach Anspruch 1, dadurch gekennzeichnet, daß die Befestigungszusammensetzung 25 bis 60 Gew.-% des Salzes im trockenen Zustand ausmacht.

3. Verfahren nach Anspruch 1 oder 2, dadurch gekennzeichnet, daß das Salz Natriumchlorid ist, das mit 10 bis 100 g/m² Straßenbelag aufgebracht wird.

4. Verfahren nach einem der vorstehenden Ansprüche, dadurch gekennzeichnet, daß man auf den Straßenbelag wenigstens eine Schicht einer wäßrigen Zusammensetzung aufbringt, die aus einem Gemisch des Salzes und der Befestigungszusammensetzung besteht.

5. Verfahren nach Anspruch 4, dadurch gekennzeichnet, daß man auf den Straßenbelag eine Schicht einer Zusammensetzung aufbringt, die viel Befestigungszusammensetzung und wenig Salz enthält, das Wasser verdampfen läßt, anschließend eine Schicht einer Zusammensetzung aufbringt, die viel Salz und wenig Befestigungszusammensetzung enthält, das Wasser verdampfen läßt, und schließlich eine Schicht einer Zusammensetzung aufbringt, die viel Befestigungszusammensetzung und wenig Salz enthält.

6. Befestigungszusammensetzung zur Durchführung des Verfahrens nach einem der vorstehenden Ansprüche, dadurch gekennzeichnet, daß sie ein Gemisch aus einem Klebstoff, der aus einer wäßrigen Dispersion eines filmbildenden Polymeren oder Copolymeren besteht, und ein hydrophobes wasserlösliches Mittel, das an der Luft wasserunlöslich wird, umfaßt, wobei der Gewichtsanteil des hydrophoben Mittels, bezogen auf die Trockensubstanz des Klebstoffs, 5 bis 25% beträgt.

7. Zusammensetzung nach Anspruch 6, dadurch gekennzeichnet, daß sie, bezogen auf den trockenen Zustand, 10 bis 20 000 p.p.m. eines Schaumbildungsverhinderungsmittels enthält.

8. Zusammensetzung nach Anspruch 6 oder 7, dadurch gekennzeichnet, daß der Klebstoff eine wäßrige Dispersion eines Styrol-Butadien-Copolymeren ist, das 30 bis 80 Gew.-% Styrol enthält.

9. Zusammensetzung nach einem der Ansprüche 6 bis 8, dadurch gekennzeichnet, daß das hydrophobe Mittel ein Silikonat ist.

10. Zusammensetzung nach Anspruch 9, dadurch gekennzeichnet, daß das Silikonat ein Kaliummethylsilikonat ist.

11. Zusammensetzung nach einem der Ansprüche 6 bis 10, dadurch gekennzeichnet, daß der Gewichtsanteil des hydrophoben Mittels, bezogen auf die Trockensubstanz des Klebstoffs, 10 bis 15% beträgt.

12. Zusammensetzung nach einem der Ansprüche 6 bis 11, dadurch gekennzeichnet, daß sie ein zweites hydrophobes Mittel enthält.

13. Zusammensetzung nach Anspruch 12, dadurch gekennzeichnet, daß das zweite hydrophobe Mittel unter den wasserlöslichen, wasserlöslich gemachten oder dispergierten langkettigen (C$_6$ bis C$_{18}$) Mono- und Polyaminen, den N-Alkyl (C$_8$ bis C$_{22}$) Mono- oder Diaminen des Polypropylens oder den langkettigen (C$_{16}$ bis C$_{30}$) Monoalkoholen ausgewählt wird.

14. Zusammensetzung nach Anspruch 12 oder 13, dadurch gekennzeichnet, daß das zweite hydrophobe Mittel 0 bis 5 Gew.-% der Befestigungszusammensetzung im trockenen Zustand ausmacht.

15. Verfahren nach einem der Ansprüche 1 bis 5, dadurch gekennzeichnet, daß man die Zusammensetzung nach einem der Ansprüche 6 bis 14 einsetzt.

## Claims

1. Process for preventing the formation of black ice on roads, characterised in that a road surface has fixed thereto a salt which lowers the freezing point of water by means of an aqueous fixative composition which comprises a mixture of an adhesion-promoting agent formed by an aqueous dispersion of a film-forming polymer or copolymer and a water-soluble hydrophobic agent which, in air, becomes insoluble in water, the proportion by weight of hydrophobic agent with respect to the dry solids of the adhesion-promoting agent being from 5 to 25%, the fixative composition being used in a proportion such that the adhesion-promoting agent plus the hydrophobic agent represents, in dry wight, from 10 to 120% of the weight of the salt.

2. Process according to claim 1, characterised in that the fixative composition represents from 25 to 60%, in dry weight, of the weight of the salt.

3. Process according to claim 1 or claim 2, characterised in that the salt is sodium chloride, applied at the rate of 10 to 100 g per square metre of road surface.

4. Process according to any one of the preceding claims, characterised in that the road surface has applied thereto at least one layer of an aqueous composition comprising a mixture of salt and fixative composition.

5. Process according to claim 4, characterised in that the road surface has applied thereto a layer of a composition with a high content of fixative composition and a low content of salt, the water is allowed to evaporate, whereafter a layer of a composition with a high content of salt and a low content of fixation composition is applied, the water is allowed to evaporate and finally a layer of a composition with a high content of fixative composition and a low content of salt is applied.

6. A fixation composition for carrying out the process according to any one of the preceding claims, characterised in that it comprises a mixture of an adhesion-promoting agent formed by an aqueous dispersion of a film-forming polymer or copolymer and a water-soluble hydrophobic agent becoming, in air, insoluble in water, the proportion by weight of hydrophobic agent relatively to the dry solids of adhesion-promoting agent being from 5 to 25%.

7. Composition according to claim 6, characterised in that is comprises a foam-inhibiting agent at the rate of 10 to 20 000 ppm in dry weight.

8. Composition according to claim 6 or claim 7, characterised in that the adhesion-promoting agent is an aqueous dispersion of a styrene-butadiene copolymer containing by weight from 30 to 80% of styrene.

9. Composition according to any one of claims 6 to 8, characterised in that the hydrophobic agent is a siliconate.

10. Composition according to claim 9, characterised in that the siliconate is a potassium methyl siliconate.

11. Composition according to any one of claims 6 to 10, characterised in that the proportion wy weight of hydrophobic agent relatively to the dry solids of the adhesion-promoting agent is from 10 to 15%.

12. Composition according to any one of claims 6 to 11, characterised in that is comprises a second hydrophobic agent.

13. Composition according to claim 12, charaterised in that the second hydrophobic agent is selected from the long chain ($C_6$ to $C_{18}$) monoamines or polyamines which are water-soluble or made water-soluble or dispersible, the ($C_8 - C_{22}$) N-alkyl polypropylene monoamines or diamines or the long-chain ($C_{16} - C_{30}$) monoalcohols.

14. Composition according to claim 12 or claim 13, characterised in that the second hydrophobic agent represents from 0 to 5%, in dry weight, of the fixative composition.

15. Process according to any one of claims 1 to 5, characterised in that the composition according to one of claims 6 to 14 is employed.